# EUROPEAN PATENT SPECIFICATION

(11) **EP 4 613 503 B1**
(45) Date of publication and mention of the grant of the patent: **08.04.2026**
(21) Application number: 25156221.1
(22) Date of filing: 06.02.2025
(51) Int. Cl.: B60C 1/00, C08L 7/00, C08L 97/02, C08L 61/18

(54) **RUBBER COMPOSITION FOR TIRE TREAD AND TIRE**
KAUTSCHUKZUSAMMENSETZUNG FÜR REIFENLAUFFLÄCHE UND REIFEN
COMPOSITION DE CAOUTCHOUC POUR BANDE DE ROULEMENT DE PNEU ET PNEU

(30) Priority: 06.03.2024 JP 2024033503
(43) Date of publication of application: 10.09.2025
(73) Proprietor: Toyo Tire Corporation, Itami-shi, Hyogo 664-0847 (JP)
(72) Inventor: MOGARI, Keisuke, Itami-shi, Hyogo, 664-0847 (JP)
(74) Representative: Ricker, Mathias

(56) References cited:
- JP-A- H 107 841
- US-A1- 2023 331 963

## Description

### BACKGROUND OF THE INVENTION

### 1. Field of the Invention

The present invention relates to a rubber composition for a tire tread and a tire using the same.

### 2. Description of Related Art

Grip performance on an icy road surface (on-ice performance) is required for tires for driving on an icy road such as studless tires, and for example, JPH10-007841A discloses that vegetable granules such as crushed walnut shell are blended in a rubber composition used for a tread of a studless tire.

WO2017/069273A1 discloses a rubber composition containing a diene rubber component, a short fiber, and a surfactant as a rubber composition having excellent fracture resistance, excellent wear resistance, and excellent on-ice performance. Moreover, JP2019-156951A discloses a rubber composition containing a diene rubber, carbon black and/or a white filler, silicone-based microparticles, a nonionic surfactant, and thermally expanding microcapsules as a rubber composition having excellent on-ice performance and excellent wear resistance performance. US2023331963A1 discloses a rubber composition for tires comprising vegetable granules surface-treated with a resin liquid of a rubber adhesion improver, exhibiting excellent on-ice performance, wear resistance, low heat generation properties, and wet grip performance.

### SUMMARY OF THE INVENTION

Recently, for tires for driving on an icy road such as studless tires, not only improvement of the on-ice performance, but also the grip performance on a wet road surface (wet performance) is increasingly important, and low heat generation property is also required in view of low fuel consumption.

Here, although those in which a surfactant is blended are known as rubber compositions having excellent on-ice performance as in WO2017/069273A1 and JP2019-156951A, it is not known that vegetable granules having a surface treated with a sulfonic acid-type surfactant are blended, and there is room for improvement in view of the on-ice performance, the wet performance, and the low heat generation property.

In view of the above point, an object of the embodiment of the invention is to provide a rubber composition for a tire tread having excellent on-ice performance, excellent wet performance, and excellent low heat generation property and to provide a tire using the same.

The invention includes the embodiments shown below.
[1] A rubber composition for a tire tread containing a rubber component containing a diene rubber and vegetable granules having a surface treated with a sulfonic acid-type surfactant.
[2] The rubber composition for a tire tread according to [1] which further contains carbon black having a surface treated with a sulfonic acid-type surfactant.
[3] The rubber composition for a tire tread according to [1] or [2], wherein the amount of the sulfonic acid-type surfactant contained in the rubber composition is 0.1 to 30 parts by mass based on 100 parts by mass of the rubber component.
[4] The rubber composition for a tire tread according to any one of [1] to [3], wherein the sulfonic acid-type surfactant contains at least one selected from the group consisting of a naphthalenesulfonic acid formalin condensate salt, an alkylnaphthalenesulfonic acid formalin condensate salt, an alkylbenzenesulfonic acid salt, and an alkylsulfonic acid salt.
[5] The rubber composition for a tire tread according to any one of [1] to [4], wherein the amount of the vegetable granules which is the amount excluding the sulfonic acid-type surfactant adhered by the surface treatment is one to 30 parts by mass based on 100 parts by mass of the rubber component.
[6] A tire having a tread formed with the rubber composition according to any one of [1] to [5].

According to the embodiment of the invention, a rubber composition for a tire tread having excellent on-ice performance, excellent wet performance, and excellent low heat generation property can be provided.

### DESCRIPTION OF EMBODIMENTS

In the rubber composition for a tire tread (also simply called "rubber composition" below) according to the embodiment, a diene rubber is used as the rubber component. The diene rubber refers to a rubber having a repeating unit corresponding to a diene monomer having a conjugated double bond and contains a carbon-carbon double bond in the main chain of the polymer.

Specific examples of the diene rubber include a natural rubber (NR), a synthetic isoprene rubber (IR), a butadiene rubber (BR), a styrene butadiene rubber (SBR), a nitrile rubber (NBR), a chloroprene rubber (CR), a styrene-isoprene copolymer rubber, a butadiene-isoprene copolymer rubber, a styrene-isoprene-butadiene copolymer rubber, and the like. The concept of these diene rubbers also includes those in which the terminal or the main chain has been modified according to the need (for example, terminal-modified SBR) and those modified to add a desired feature (for example, modified NR). Any one kind of these diene rubbers may be used, or two or more kinds thereof may be used in combination.

The diene rubber is preferably at least one selected from the group consisting of a natural rubber, a synthetic isoprene rubber, a butadiene rubber, and a styrene butadiene rubber, more preferably at least one selected from the group consisting of a natural rubber, a synthetic isoprene rubber, and a butadiene rubber. In one embodiment, 100 parts by mass of the rubber component preferably contain 40 to 90 parts by mass of a natural rubber and/or a synthetic isoprene rubber and 10 to 60 parts by mass of a butadiene rubber, more preferably contain 50 to 80 parts by mass of a natural rubber and/or a synthetic isoprene rubber and 20 to 50 parts by mass of a butadiene rubber or further preferably contains 55 to 70 parts by mass of a natural rubber and/or a synthetic isoprene rubber and 30 to 45 parts by mass of a butadiene rubber.

In the rubber composition according to the embodiment, vegetable granules having a surface treated with a sulfonic acid-type surfactant are blended. Through the surface treatment of the vegetable granules with a sulfonic acid-type surfactant, the sulfonic acid-type surfactant lies between the hydrophilic vegetable granules and the hydrophobic diene rubber. As a result, the vegetable granules do not easily agglutinate, and the dispersibility improves. It is believed that the low heat generation property and the on-ice performance thus improve. Moreover, because the sulfonic acid-type surfactant exists in the rubber composition, the water contact angle on the rubber surface becomes small. It is believed that water thus more easily enters holes formed after the vegetable granules falls off the tread through capillary phenomenon and that the water film between the tread and the road surface is reduced or removed, resulting in improvement of the wet performance.

As the vegetable granules, ground products of seed husks, fruit pits, grains and their core materials, and the like can be mentioned, and at least one kind thereof can be incorporated. For example, ground products of fruit pits and seed husks such as walnuts, apricots, camellias, peaches, plums, ginkgo nuts, peanuts, and chestnuts, ground products of grains such as rice, wheat, millet, Japanese millet, and corn, ground products of grain core materials such as corn cobs, and the like can be mentioned. Because these materials have Mohs hardness of around 2 to 5 and are harder than ice, scratching effect can be exhibited on an icy road surface.

As the vegetable granules, granules having an average particle size of 0.1 to 1500 µm, as the particle size before the surface treatment with the sulfonic acid-type surfactant, is preferably used. The average particle size of the vegetable granules is preferably 1 to 1300 µm, more preferably 10 to 1200 µm, further preferably 100 to 1000 µm. Here, the average particle size of the vegetable granules is the 90% volume particle size (D90) and means the particle size at an integrated value of 90% in a particle size distribution (based on volume) measured by the laser diffraction-scattering method. For example, the average particle size is determined with a laser diffraction particle size distribution analyzer "SALD-2200" manufactured by SHIMADZU CORPORATION using a red semiconductor laser (wavelength of 680 nm) as the light source.

To improve blending in the rubber component and prevent falling off, the vegetable granules may be one having a surface treated with a resin liquid of a rubber adhesiveness-improving agent. An example of the rubber adhesiveness-improving agent is the mixture of a resorcin-formalin resin initial condensate and natural rubber latex or diene synthetic rubber latex (RFL-treated liquid) described in JPH10-007841A above.

In one embodiment, the vegetable granules to be subjected to the surface treatment with the sulfonic acid-type surfactant preferably contain adhesiveness-improved vegetable granules having a surface treated with a resin liquid of a rubber adhesiveness-improving agent and untreated vegetable granules having a surface which is not treated with the resin liquid. The on-ice performance can be further improved when the adhesiveness-improved vegetable granules and the untreated vegetable granules are used in combination. In such a combination use, the mass ratio of the adhesiveness-improved vegetable granules and the untreated vegetable granules is not particularly limited but is preferably 20:80 to 60:40, more preferably 30:70 to 50:50, particularly preferably 30:70 to 45:55, and the untreated vegetable granules are preferably blended in a higher amount than that of the adhesiveness-improved vegetable granules.

The sulfonic acid-type surfactant is a surfactant having a sulfo group (-SO₃H) or a salt thereof. Specific examples of the sulfonic acid-type surfactant include a naphthalenesulfonic acid formalin condensate, a salt thereof, an alkylnaphthalenesulfonic acid formalin condensate, a salt thereof, an alkylbenzenesulfonic acid, a salt thereof, an alkylsulfonic acid, and a salt thereof. These salts are preferably alkali metal salts such as a sodium salt and a potassium salt. The alkyl group of the alkylnaphthalenesulfonic acid formalin condensate has preferably one to 20 carbon atoms, more preferably one to 16 carbon atoms. The alkyl groups of the alkylbenzenesulfonic acid and the alkylsulfonic acid have preferably eight to 20 carbon atoms, more preferably eight to 18 carbon atoms.

In one embodiment, the sulfonic acid-type surfactant is preferably at least one (S1) selected from the group consisting of a naphthalenesulfonic acid formalin condensate salt, an alkylnaphthalenesulfonic acid formalin condensate salt, an alkylbenzenesulfonic acid salt, and an alkylsulfonic acid salt. More preferably, the sulfonic acid-type surfactant is at least one (S2) selected from the group consisting of a naphthalenesulfonic acid formalin condensate salt and an alkylbenzenesulfonic acid salt. In these cases, the amount of (S1) above (preferably (S2) above) in 100 mass% of the sulfonic acid-type surfactant is preferably 70 mass% or more, more preferably 90 mass% or more, and may be 100 mass%.

The vegetable granules having a surface treated with a sulfonic acid-type surfactant are obtained by dissolving or diluting a sulfonic acid-type surfactant in a solvent such as water into a liquid and applying the liquid sulfonic acid-type surfactant to vegetable granules by spraying or the like. The vegetable granules may be dried after the application and then mixed with the rubber component or may be mixed with the rubber component in the wet state without drying. Even when the vegetable granules in the wet state are mixed with the rubber component, the solvent vaporizes with the heat during mixing. Thus, the vegetable granules having a surface treated with the sulfonic acid-type surfactant can be obtained in a state dispersed in the rubber component.

The vegetable granules content which is the amount excluding the sulfonic acid-type surfactant adhered by the surface treatment is preferably one to 30 parts by mass based on 100 parts by mass of the rubber component, more preferably one to 20 parts by mass, further preferably two to 15 parts by mass, particularly preferably three to eight parts by mass.

The amount of the sulfonic acid-type surfactant adhered to the vegetable granules is not particularly limited and may be, for example, one to 40 parts by mass based on 100 parts by mass of the vegetable granules before the treatment, two to 30 parts by mass, three to 20 parts by mass, or four to 15 parts by mass.

In the rubber composition according to the present embodiment, carbon black having a surface treated with a sulfonic acid-type surfactant is preferably blended. When not only the vegetable granules but also carbon black has a surface treated with a sulfonic acid-type surfactant, the dispersibility thereof improves, and the sulfonic acid-type surfactant exists in the entire rubber composition. Accordingly, it is believed that the water contact angle on the rubber surface can be made smaller and that the effect of improving the wet performance, which is obtained because water enters holes formed when the vegetable granules fall off, can be enhanced.

The carbon black is not particularly limited, and various known kinds can be used. Specific examples thereof include SAF grade (N100 series), ISAF grade (N200 series), HAF grade (N300 series), FEF grade (N500 series), and GPF grade (N600 series) (both are ASTM grade). Any one kind of the carbon black of the grades or a combination of two or more kinds thereof can be used.

In one embodiment, to improve the effect of achieving both low heat generation property and modulus, the nitrogen adsorption specific surface area (N₂SA) of the carbon black according to JIS K6217-2:2017 is preferably 90 to 150 m²/g as the measurement value before the surface treatment with the sulfonic acid-type surfactant. The nitrogen adsorption specific surface area of the carbon black is more preferably 100 to 145 m²/g, further preferably 110 to 140 m²/g.

The same sulfonic acid-type surfactant as the sulfonic acid-type surfactant used for the surface treatment of the vegetable granules can be used for the surface treatment of the carbon black.

The carbon black having a surface treated with a sulfonic acid-type surfactant is obtained by dissolving or diluting a sulfonic acid-type surfactant in a solvent such as water into a liquid and applying the liquid sulfonic acid-type surfactant to carbon black by spraying or the like. The carbon black may be dried after the application and then mixed with the rubber component or may be mixed with the rubber component in the wet state without drying. Even when the carbon black in the wet state is mixed with the rubber component, the solvent vaporizes with the heat during mixing. Thus, the carbon black having a surface treated with the sulfonic acid-type surfactant can be obtained in a state dispersed in the rubber component.

The carbon black content is not particularly limited and may be, as the amount excluding the sulfonic acid-type surfactant adhered by the surface treatment, for example, 20 to 100 parts by mass based on 100 parts by mass of the rubber component, 30 to 80 parts by mass, or 40 to 60 parts by mass.

The amount of the sulfonic acid-type surfactant adhered to the carbon black is not particularly limited and may be, for example, one to 40 parts by mass based on 100 parts by mass of the carbon black before the treatment, two to 30 parts by mass, three to 20 parts by mass, or four to 15 parts by mass.

The amount of the sulfonic acid-type surfactant contained in the rubber composition according to the present embodiment is preferably 0.1 to 30 parts by mass based on 100 parts by mass of the rubber component, more preferably 0.5 to 25 parts by mass, more preferably one to 20 parts by mass, more preferably two to 15 parts by mass, further preferably three to 10 parts by mass, to improve the effect of addition thereof.

As described above, the rubber composition according to the present embodiment contains the vegetable granules having a surface treated with the sulfonic acid-type surfactant and preferably further contains the carbon black having a surface treated with the sulfonic acid-type surfactant. Thus, the amount of the sulfonic acid-type surfactant contained in the rubber composition includes the amount (A) of the sulfonic acid-type surfactant adhered to the vegetable granules by the surface treatment, and when the carbon black having a surface treated with the sulfonic acid-type surfactant is contained, the amount includes the amount (B) of the sulfonic acid-type surfactant adhered to the carbon black in addition to the amount (A). Here, the sulfonic acid-type surfactant is basically contained in the rubber composition in the form of being applied to the surfaces of the vegetable granules and the carbon black but may be contained in the rubber composition without being applied to the surfaces as long as the effect of the present embodiment is exhibited.

An additive which is generally used for a rubber composition, such as a reinforcing filler other than carbon black, zinc oxide, stearic acid, an oil, an antioxidant, a wax, a processing aid, a vulcanizing agent, and a vulcanization accelerator, can be blended in the rubber composition according to the present embodiment in addition to the above components. Here, an example of the reinforcing filler other than carbon black is silica. When silica is blended, a silane coupling agent may be used in combination.

The zinc oxide content is not particularly limited and may be, for example, based on 100 parts by mass of the rubber component, 0 to 10 parts by mass, 0.5 to five parts by mass, or one to four parts by mass.

The stearic acid content is not particularly limited and may be, for example, based on 100 parts by mass of the rubber component, 0 to 10 parts by mass, 0.5 to five parts by mass, or one to four parts by mass.

The oil content is not particularly limited and may be, for example, based on 100 parts by mass of the rubber component, 0 to 40 parts by mass, one to 30 parts by mass, or two to 20 parts by mass.

Examples of the antioxidant include various antioxidants such as amine-ketone-based, aromatic secondary amine-based, monophenol-based, bisphenol-based, and benzimidazole-based antioxidants, and any one kind thereof or a combination of two or more kinds thereof can be used. The antioxidant content is not particularly limited and may be, for example, based on 100 parts by mass of the rubber component, 0 to 10 parts by mass, 0.5 to five parts by mass, or one to four parts by mass.

The wax content is not particularly limited and may be, for example, based on 100 parts by mass of the rubber component, 0 to 10 parts by mass, 0.5 to five parts by mass, or one to four parts by mass.

The processing aid content is not particularly limited and may be, for example, based on 100 parts by mass of the rubber component, 0 to 10 parts by mass, 0.5 to five parts by mass, or one to four parts by mass.

As the vulcanizing agent, sulfur is preferably used. The vulcanizing agent content is not particularly limited and may be, based on 100 parts by mass of the rubber component, 0.1 to 10 parts by mass, 0.5 to five parts by mass, or one to three parts by mass.

Examples of the vulcanization accelerator include various vulcanization accelerators such as sulfenamide-based, guanidine-based, thiuram-based, and thiazole-based vulcanization accelerators, and any one kind thereof alone or a combination of two or more kinds thereof can be used. The vulcanization accelerator content is not particularly limited and may be, based on 100 parts by mass of the rubber component, 0.1 to 10 parts by mass, one to seven parts by mass, or two to five parts by mass.

The rubber composition according to the present embodiment can be produced by kneading using a generally used mixer such as a Banbury mixer, a kneader, and a roll according to a general method. That is, for example, by adding and mixing the additives excluding the vulcanizing agent and the vulcanization accelerator in the rubber component in a first mixing stage and next adding and mixing the vulcanizing agent and the vulcanization accelerator in the obtained mixture in a final mixing stage, a rubber composition can be prepared.

In one embodiment, surface-treated materials of vegetable granules and carbon black may be first obtained by applying the liquid sulfonic acid-type surfactant by spraying or the like to powder containing the vegetable granules and carbon black and drying after the application and then mixed with the rubber component. Alternatively, the liquid sulfonic acid-type surfactant may be applied by spraying or the like to powder containing vegetable granules and carbon black, and the powder in the wet state may be mixed with the rubber component without drying after the application.

The rubber composition obtained in this manner can be used for the tread of a tire. Examples of the tire include pneumatic tires of various sizes for various applications, such as tires of passenger vehicles and large-sized tires of trucks and buses, and a large-sized tire is preferable. Moreover, the application is preferably use for a studless tire because of the excellent on-ice performance.

The tire according to one embodiment has a tread produced using the rubber composition. That is, the tire according to one embodiment has a tread rubber formed with the rubber composition. The structures of the tread rubber of a tire include a two-layer structure having a cap rubber and a base rubber and a single-layer structure in which both are combined. In the single-layer structure, the tread rubber may be formed with the rubber composition. In the two-layer structure, the cap rubber on the outer side which comes into contact with the road surface is preferably formed with the rubber composition. However, the base rubber placed inside the cap rubber may be formed with the rubber composition, and both the cap rubber and the base rubber may be formed with the rubber composition.

The production method of the tire is not particularly limited. For example, the rubber composition is formed into a predetermined form by extrusion processing according to a general method, and an unvulcanized tread rubber part is obtained. By assembling the tread rubber part with other tire parts, an unvulcanized tire (green tire) is produced. Then, for example, by vulcanizing and forming at 140°C to 180°C, a tire can be produced.

### EXAMPLES

Examples of the invention are shown below, but the invention is not limited to these Examples.

The components used in the Examples and the Comparative Examples are as follows.
· Natural rubber: RSS#3
· Butadiene rubber: "BR150B" manufactured by UBE Corporation
· Carbon black: ISAF, "Seast 6" manufactured by TOKAI CARBON CO., LTD., N₂SA=119 m²/g
· Zinc oxide: "Zinc Oxide, Type 2" manufactured by MITSUI MINING & SMELTING CO., LTD.
. Stearic acid: "Beads Stearic Acid" manufactured by NOF CORPORATION
· Vegetable granules 1: untreated vegetable granules, walnut husk pulverized product, "Soft Grit #46" manufactured by Nippon Walnut Co., Ltd., D90 = 400 µm
Vegetable granules 2: adhesiveness-improved vegetable granules, granules obtained by subjecting walnut husk pulverized product ("Soft Grit #46" manufactured by Nippon Walnut Co., Ltd.) to surface treatment with an RFL treatment liquid according to the method described in paragraph 0015 of JPH10-007841A (D90 of vegetable granules after treatment = 300 µm)
Oil: "Process NC140" manufactured by ENEOS Corporation
· Surfactant A: sodium lauryl sulfate (granular), "EMAL 2FG" manufactured by Kao Corporation (active ingredient 98 mass%)
· Surfactant B: β-naphthalenesulfonic acid formalin condensate sodium salt (powder), "DEMOL N" manufactured by Kao Corporation (active ingredient 100 mass%)
· Surfactant C: β-naphthalenesulfonic acid formalin condensate sodium salt (aqueous solution), "DEMOL NL" manufactured by Kao Corporation (active ingredient 41 mass%)
· Surfactant D: sodium linear alkylbenzene sulfonate (water-diluted product, the carbon numbers of the alkyl groups of 10 to 16), "NEWREX (registered trademark) R-25L" manufactured by NOF CORPORATION (active ingredient 25 mass%)
· Antioxidant: "Nocrac 6C" manufactured by OUCHI SHINKO CHEMICAL INDUSTRIAL CO., LTD.
· Sulfur: "Powder Sulfur" manufactured by Tsurumi Chemical Industry Co., ltd.
Vulcanization accelerator: "Soxinol CZ" manufactured by Sumitomo Chemical Co., Ltd.

Rubber compositions were prepared according to the compositions (parts by mass) shown in Table 1 below using a Banbury mixer. Here, the parts by mass of the surfactants A to D in Table 1 are the parts by mass as the active ingredients.

Specifically, in Comparative Examples 1 to 3, the agents to be added excluding sulfur and the vulcanization accelerator were first added to and kneaded in the rubber components in a first mixing stage (discharge temperature = 155°C). Next, sulfur and the vulcanization accelerator were added to and kneaded in the obtained kneaded material in a final mixing stage (discharge temperature = 90°C), and a rubber composition was thus prepared. This preparation method is shown as "method 1" in Table 1.

In Examples 1 to 5 and 8, the vegetable granules 1 and the vegetable granules 2 were added to carbon black, and while this was powder mixed, the liquid surfactant C or D was sprayed to the entire mixture. Next, the water was vaporized by drying in an oven at 50°C for eight hours, and a mixture X of carbon black and the vegetable granules having surfaces treated with the surfactant C or D was thus obtained. Then, using a Banbury mixer, the mixture X and the agents to be added excluding sulfur and the vulcanization accelerator were added to and kneaded in the rubber components in a first mixing stage (discharge temperature = 155°C). Next, sulfur and the vulcanization accelerator were added to and kneaded in the obtained kneaded material in a final mixing stage (discharge temperature = 90°C), and a rubber composition was thus prepared. This preparation method is shown as "method 2" in Table 1.

In Example 6, the vegetable granules 1 and the vegetable granules 2 were added to carbon black, and while this was powder mixed, the liquid surfactant C was sprayed to the entire mixture. Then, using the powder mixture Y in the wet state soon after spraying, the mixture Y and the agents to be added excluding sulfur and the vulcanization accelerator were first added to and kneaded in the rubber components with a Banbury mixer in a first mixing stage (discharge temperature = 155°C). Next, sulfur and the vulcanization accelerator were added to and kneaded in the obtained kneaded material in a final mixing stage (discharge temperature = 90°C), and a rubber composition was thus prepared. This preparation method is shown as "method 3" in Table 1.

In Example 7, the vegetable granules 1 and the vegetable granules 2 were mixed with carbon black, and the liquid surfactant C was sprinkled over the mixture. Then, using the powder mixture Z in the wet state soon thereafter, the mixture Z and the agents to be added excluding sulfur and the vulcanization accelerator were first added to and kneaded in the rubber components with a Banbury mixer in a first mixing stage (discharge temperature = 155°C). Next, sulfur and the vulcanization accelerator were added to and kneaded in the obtained kneaded material in a final mixing stage (discharge temperature = 90°C), and a rubber composition was thus prepared. This preparation method is shown as "method 4" in Table 1.

The on-ice performance, the wet performance, the low heat generation property, and the water contact angle of the obtained rubber compositions were evaluated. The evaluation methods are as follows.

### [On-Ice Performance]

Pneumatic tires (tire size: 11.5R22.5 14PR) were produced using the rubber composition for the tread rubber by vulcanizing and forming according to a normal method. The obtained tires were mounted on a 25-ton truck. The truck was driven at 30 km/h on an ice floe road at -3 ± 3°C and then braked suddenly (without ABS operation). The braking distance (m) was measured, and the reciprocal thereof was determined. The reciprocals of the braking distances thus obtained (average values of n = 10) were compared and expressed with indexes, where the value of Comparative Example 1 was regarded as 100. As the index becomes larger, the braking distance becomes shorter, meaning that the on-ice braking performance is excellent.

### [Wet Performance]

Tires produced as described in the evaluation method of the on-ice performance were used. The treads of the tires were abraded to the main groove depth of 50%. A vehicle on which the 50% abraded tires were mounted entered a road surface with a water depth of 5 mm at a speed of 40 km/h and then stopped suddenly. The braking distance at this point was measured, and the reciprocal thereof was calculated as an index. The value was evaluated with an index, where the value of Comparative Example 1 was regarded as 100. As the index becomes larger, the braking distance becomes shorter, meaning that the wet grip performance is excellent.

### [Low Heat Generation Property]

A tire produced as described in the evaluation method of the on-ice performance was used. The tire was run on a drum under the high-speed endurance testing conditions specified in Federal Motor Vehicle Safety Standards FMVSS119, and soon after that, a thermistor was inserted at the belt end position, at which the tread thickness was maximum, on the belt to measure the temperature. The results were expressed with an index calculated by the expression below. As the value becomes larger, the tire is not heated easily, meaning that the low heat generation property is excellent.

### (Temperature of tire of Comparative Example 1) × 100/(Temperature of test tire)

### [Water Contact Angle]

The rubber composition was vulcanized at 160°C for 30 minutes, and a vulcanized rubber sheet having a thickness of 2 mm was produced. The water contact angle was measured using the vulcanized rubber sheet. Specifically, the vulcanized rubber sheet having a thickness of 2 mm was maintained at a measurement temperature of 23°C for 10 minutes, and a water droplet of 20 µL was dropped on the sheet surface. The contact angle of the droplet after 15 seconds was measured using a contact angle analyzer. The reciprocal of the contact angle was expressed with an index, where the value of Comparative Example 1 was regarded as 100. As the index becomes larger, it means that the contact angle is smaller.

**[Table 1]**

| | Comp. Ex. 1 | Comp. Ex. 2 | Comp. Ex. 3 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| Preparation method | Method 1 | Method 1 | Method 1 | Method 2 | Method 2 | Method 2 | Method 2 | Method 2 | Method 3 | Method 4 | Method 2 |

| Composition (parts bv mass) | | | | | | | | | | | |
|---|---|---|---|---|---|---|---|---|---|---|---|
| Natural rubber | 60 | 60 | 60 | 60 | 60 | 60 | 60 | 60 | 60 | 60 | 60 |
| Butadiene rubber | 40 | 40 | 40 | 40 | 40 | 40 | 40 | 40 | 40 | 40 | 40 |
| Carbon black | 50 | 50 | 50 | 50 | 50 | 50 | 50 | 50 | 50 | 50 | 50 |
| Zinc oxide | 3 | 3 | 3 | 3 | 3 | 3 | 3 | 3 | 3 | 3 | 3 |
| Stearic acid | 1 | 1 | 1 | 1 | 1 | 1 | 1 | 1 | 1 | 1 | 1 |
| Vegetable granules 1 | 3 | 3 | 3 | 3 | 3 | 3 | 3 | 3 | 3 | 3 | 3 |
| Vegetable granules 2 | 2. | 2 | 2 | 2 | 2 | 2. | 2 | 2 | 2 | 2 | 2 |
| Oil | 2 | 2 | 2 | 2 | 2 | 2 | 2 | 2 | 2 | 2 | 2 |
| Surfactant A | | 5 | | | | | | | | | |
| Surfactant B | | | 5 | | | | | | | | |
| Surfactant C | | | | 1 | 3 | 5 | 10 | 20 | 3 | 3 | |
| Surfactant D | | | | | | | | | | | 5 |
| Antioxidant | 1 | 1 | 1 | 1 | 1 | 1 | 1 | 1 | 1 | 1 | 1 |
| Sulfur | 1 | 1 | 1 | 1 | 1 | 1 | 1 | 1 | 1 | 1 | 1 |
| Vulcanization accelerator | 2 | 2 | 2 | 2 | 2 | 2 | 2 | 2 | 2 | 2 | 2 |

| Evaluation (index) | | | | | | | | | | | |
|---|---|---|---|---|---|---|---|---|---|---|---|
| On-ice performance | 100 | 95 | 95 | 103 | 106 | 110 | 112 | 105 | 103 | 102 | 108 |
| Wet performance | 100 | 100 | 101 | 102 | 105 | 107 | 108 | 103 | 103 | 101 | 105 |
| Low heat generation property | 100 | 93 | 95 | 102 | 106 | 110 | 112 | 105 | 103 | 102 | 107 |
| Water contact angle | 100 | 101 | 102 | 100 | 102 | 104 | 106 | 110 | 101 | 100 | 102 |

The results are as shown in Table 1. Compared to Comparative Example 1 as a control, in Comparative Example 2, although a surfactant was blended, a granular sulfate ester-type surfactant was used as the surfactant, and the surface treatment of the vegetable granules and the carbon black was not conducted. Accordingly, the on-ice performance and the low heat generation property of Comparative Example 2 were inferior to those of Comparative Example 1. In Comparative Example 3, although a sulfonic acid-type surfactant was blended, powder form was used, and the surface treatment of the vegetable granules and the carbon black was not conducted. Accordingly, the on-ice performance and the low heat generation property of Comparative Example 3 were inferior to those of Comparative Example 1.

On the other hand, in Examples 1 to 8, in which vegetable granules having surfaces treated with a sulfonic acid-type surfactant were blended, the on-ice performance, the wet performance, and the low heat generation property were improved, and the water contact angle was small, compared to those of Comparative Example 1.

In this regard, the upper limits and the lower limits of the various numerical ranges described in the specification can be combined freely, and all the combinations should be regarded as being described as preferable numerical ranges in the present specification. Moreover, a numerical range "X to Y" means X or more and Y or less.

## Claims

1. A rubber composition for a tire tread, comprising:
a rubber component containing a diene rubber; and
vegetable granules having a surface treated with a sulfonic acid-type surfactant.

2. The rubber composition for a tire tread according to claim 1 which further comprises carbon black having a surface treated with a sulfonic acid-type surfactant.

3. The rubber composition for a tire tread according to claim 1 or 2, wherein the amount of the sulfonic acid-type surfactant contained in the rubber composition is 0.1 to 30 parts by mass based on 100 parts by mass of the rubber component.

4. The rubber composition for a tire tread according to any one of claims 1 to 3, wherein the sulfonic acid-type surfactant contains at least one selected from the group consisting of a naphthalenesulfonic acid formalin condensate salt, an alkylnaphthalenesulfonic acid formalin condensate salt, an alkylbenzenesulfonic acid salt, and an alkylsulfonic acid salt.

5. The rubber composition for a tire tread according to any one of claims 1 to 4, wherein the amount of the vegetable granules which is the amount excluding the sulfonic acid-type surfactant adhered by the surface treatment is one to 30 parts by mass based on 100 parts by mass of the rubber component.

6. The rubber composition for a tire tread according to any one of claims 1 to 5, wherein the average particle size of the vegetable granules which is the average particle size before the surface treatment with the sulfonic acid-type surfactant is 0.1 to 1500 µm, wherein the average particle size of the vegetable granules is the 90% volume particle size (D90) and means the particle size at an integrated value of 90% in a particle size distribution (based on volume) measured by the laser diffraction-scattering method.

7. The rubber composition for a tire tread according to any one of claims 1 to 6, wherein the vegetable granules contain adhesiveness-improved vegetable granules having a surface treated with a resin liquid of a rubber adhesiveness-improving agent and untreated vegetable granules having a surface which is not treated with the resin liquid.

8. A tire comprising a tread formed with the rubber composition according to any one of claims 1 to 7.

## Patentansprüche

1. Kautschukzusammensetzung für eine Reifenlauffläche, welche aufweist:
eine Kautschukkomponente, die einen Dienkautschuk enthält, und
Pflanzengranulate, deren Oberfläche mit einem Tensid vom Sulfonsäuretyp behandelt worden ist.

2. Kautschukzusammensetzung für eine Reifenlauffläche nach Anspruch 1, welche ferner einen Ruß aufweist, dessen Oberfläche mit einem Tensid vom Sulfonsäuretyp behandelt worden ist.

3. Kautschukzusammensetzung für eine Reifenlauffläche nach Anspruch 1 oder 2, wobei die Menge des in der Kautschukzusammensetzung enthaltenen Tensids vom Sulfonsäuretyp 0,1 bis 30 Masseteile, bezogen auf 100 Masseteile der Kautschuckomponente, beträgt.

4. Kautschukzusammensetzung für eine Reifenlauffläche nach einem der Ansprüche 1 bis 3, wobei das Tensid vom Sulfonsäuretyp mindestens eines enthält, das aus der Gruppe ausgewählt worden ist, die ein Naphthalinsulfonsäure-Formalin-Kondensatsalz, ein Alkylnaphthalinsulfonsäure-Formalin-Kondensatsalz, ein Alkylbenzolsulfonsäuresalz und einem Alkylsulfonsäuresalz umfasst.

5. Kautschukzusammensetzung für eine Reifenlauffläche nach einem der Ansprüche 1 bis 4, wobei die Menge der Pflanzengranulate, die die Menge ohne das durch die Oberflächenbehandlung anhaftende Sulfonsäure-Tensid ist, 1 bis 30 Masseteile, bezogen auf 100 Masseteile der Kautschukkomponente, beträgt.

6. Kautschukzusammensetzung für eine Reifenlauffläche nach einem der Ansprüche 1 bis 5, wobei die durchschnittliche Partikelgröße der Pflanzengranulate, die die durchschnittliche Partikelgröße vor der Oberflächenbehandlung mit dem Tensid vom Sulfonsäuretyp ist, 0,1 bis 1500 µm beträgt, wobei die durchschnittliche Partikelgröße der Pflanzengranulate die 90 % Volumenpartikelgröße (D90) ist und die Partikelgröße bei einem integrierten Wert von 90 % in einer Partikelgrößenverteilung (basierend auf dem Volumen) gemessen durch das Laserbeugungs-Streuungsverfahren bedeutet.

7. Kautschukzusammensetzung für eine Reifenlauffläche nach einem der Ansprüche 1 bis 6, wobei die Pflanzengranulate haftungsverbesserte Pflanzengranulate, die eine mit einer Harzflüssigkeit eines Kautschukhaftungsvermittlers behandelte Oberfläche aufweisen, und unbehandelte pflanzliche Granulate, die eine nicht mit der Harzflüssigkeit behandelten Oberfläche aufweisen, enthalten.

8. Reifen mit einer Lauffläche, welcher mit der Kautschukzusammensetzung nach einem der Ansprüche 1 bis 7 gebildet worden ist.

## Revendications

1. Composition de caoutchouc pour une bande de roulement de pneu, comprenant :
un composant de caoutchouc contenant un caoutchouc de type diène ; et
des granules végétaux ayant une surface traitée avec un tensioactif de type acide sulfonique.

2. Composition de caoutchouc pour une bande de roulement de pneu selon la revendication 1 qui comprend en outre du noir de carbone ayant une surface traitée avec un tensioactif de type acide sulfonique.

3. Composition de caoutchouc pour une bande de roulement de pneu selon la revendication 1 ou 2, dans laquelle la quantité du tensioactif de type acide sulfonique contenu dans la composition de caoutchouc est de 0,1 à 30 parties en masse sur la base de 100 parties en masse du composant de caoutchouc.

4. Composition de caoutchouc pour une bande de roulement de pneu selon l'une quelconque des revendications 1 à 3, dans laquelle le tensioactif de type acide sulfonique contient au moins un élément choisi parmi le groupe constitué d'un sel de condensat d'acide naphtalène sulfonique et de formaline, d'un sel de condensat d'acide alkylnaphtalène sulfonique et de formaline, d'un sel d'acide alkylbenzènesulfonique et d'un sel d'acide alkylsulfonique.

5. Composition de caoutchouc pour une bande de roulement de pneu selon l'une quelconque des revendications 1 à 4, dans laquelle la quantité des granules végétaux qui est la quantité excluant le tensioactif de type acide sulfonique fixé par adhésion par le traitement de surface est de 1 à 30 parties en masse sur la base de 100 parties en masse du composant de caoutchouc.

6. Composition de caoutchouc pour une bande de roulement de pneu selon l'une quelconque des revendications 1 à 5, dans laquelle la taille moyenne de particule des granules végétaux qui est la taille moyenne de particules avant le traitement de surface avec le tensioactif de type acide sulfonique est de 0,1 à 1500 µm, dans laquelle la taille moyenne de particules des granules végétaux est la taille de particules en répartition volumique à 90 % (D90) et correspond à la taille de particules à une valeur intégrée de 90 % sur une distribution de taille de particules (sur la base du volume) mesurée par la méthode de diffusion par diffraction laser.

7. Composition de caoutchouc pour une bande de roulement de pneu selon l'une quelconque des revendications 1 à 6, dans laquelle les granules végétaux contiennent des granules végétaux à l'adhésivité améliorée ayant une surface traitée avec un liquide de type résine d'un agent promoteur d'adhésivité au caoutchouc et des granules végétaux non traités ayant une surface qui n'est pas traitée avec le liquide de type résine.

8. Pneu comprenant une bande de roulement formée avec la composition de caoutchouc selon l'une quelconque des revendications 1 à 7.
